# EUROPEAN PATENT SPECIFICATION

(11) **EP 2 031 812 B1**
(45) Date of publication and mention of the grant of the patent: **22.06.2011**
(21) Application number: 07764125.6
(22) Date of filing: 27.06.2007
(51) Int. Cl.: H04L 12/66

(54) **SYSTEM AND METHOD FOR FACSIMILE DATA TRANSMISSION VIA NETWORK AND DEVICE AND METHOD FOR PACKAGING DATA**
SYSTEM UND VERFAHREN FÜR FAKSIMILEDATENÜBERTRAGUNG ÜBER EIN NETZWERK UND GERÄT UND VERFAHREN ZUM PACKEN VON DATEN
SYSTÈME ET PROCÉDÉ DE TRANSMISSION DE DONNÉES TÉLÉCOPIÉES VIA RÉSEAU, DISPOSITIF ET PROCÉDÉ DE MISE EN PAQUET DE DONNÉES

(30) Priority: 29.06.2006 CN 200610061446
(43) Date of publication of application: 04.03.2009
(73) Proprietor: Huawei Technologies Co., Ltd., Longgang District, Shenzhen Guangdong 518129 (CN)
(72) Inventor: LI, Ruihua, Shenzhen Guangdong 518129 (CN)
(74) Representative: Körber, Martin Hans
(86) International application number: PCT/CN2007/070194
(87) International publication number: WO 2008/003263

(56) References cited:
- EP-A- 1 119 182
- EP-A- 1 185 051
- CN-A- 1 505 378
- CN-A- 1 694 435
- US-A- 5 790 641
- US-A- 5 886 793
- US-A- 6 104 505
- US-A1- 2004 042 467
- US-A1- 2004 042 467

## Description

This application claims a priority from the Chinese Patent Application No. 200610061446.0, filed with the Chinese Patent Office on June 29, 2006 and entitled "System and Method for Transmitting Facsimile Data over a Network".

### Field of the Invention

The present invention relates to network communication technologies, and in particular to a system and a method for transmitting facsimile data over a network and an apparatus and a method for packing data.

### Background of the Invention

As Internet becomes popular, with the maturity of Internet technologies, it is possible to bear and transmit traditional facsimile information over a network. Technologies related to Internet Protocol (IP) facsimile have thus emerged. According to the real-time feature, IP facsimile is categorized into IP stored and forwarded facsimile and IP real-time facsimile.

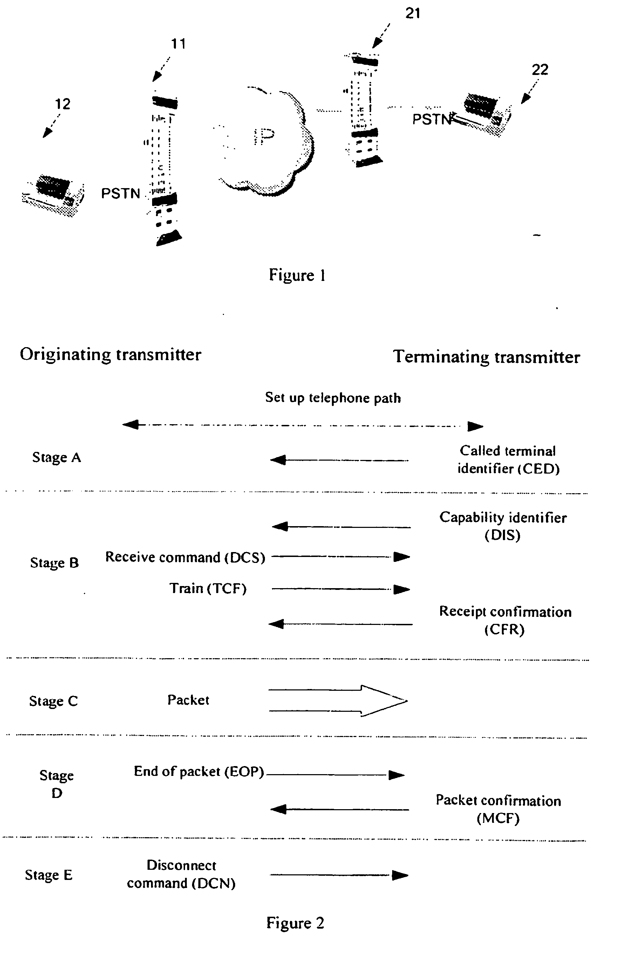

The structure of a T.38 IP real-time facsimile system is shown in Figure 1. The T.38 protocol specifically defines Procedures for Real-time Group 3 Facsimile Communication over IP Networks. The sender gateway and the receiver gateway are IP real-time facsimile gateways which complete T.38 protocol processing and perform the modulation and demodulation of data pumps (DPs, referring to the modem module for facsimile). The primary principle of T.38 IP facsimile is that the sender gateway 11 demodulates data transmitted by the fax machine 12, packs demodulated payload data into T.38 defined IP packages, and sends the IP packages to the peer gateway (the receiver gateway) 21. The receiver gateway 21 resolves the IP packages to get the payload data from the IP packages, and re-modulates the payload data and sends the re-modulated data to the fax machine 22 on the Public Switch Telephone Network (PSTN) side. It can be seen that, for IP real-time facsimile, the network bears facsimile signaling or packet information exchanged by fax machines at the two ends and the fax machines at the two ends communicate in real time.

As shown in Figure 2, in the prior art, a simple facsimile communication procedure is divided into five stages:
Stage A: the facsimile call setup stage, which is similar to the procedure of setting up a telephone call:
Stage B: the stage before packet transmission, where capabilities are negotiated and trained between the fax machines;
Stage C: the packet transmission procedure and the packet transmission control procedure:
Stage D: the stage after packet transmission, where packets are confirmed, errors are corrected and multiple facsimile pages are continuously transmitted; and
Stage E: the facsimile call release procedure.

In the facsimile procedure, only the Training Check Field (TCF) signal at stage B and the packet data at stage C are modulated at the rate specified in the prior art. Other control signaling implements negotiation and packet confirmation on the basis of V.21 (H), in the format of High Data Link Control (HDLP) frames, referred to hereinafter as V.21 frames. The V.21 protocol defines two channel modulation modes, V.21 (H) and V.21 (L). The modulation mode according to V.21 (H) mode refers to the Frequency Shift Key (FSK) modulation mode defined by V.21, in which 0 is modulated into 1850 Hz and 1 is modulated into 1650 Hz.

In T.38 IP facsimile, to save network bandwidth and reduce the processing overhead of a gateway, the gateway may encapsulate a complete V.21 frame signal into an Internet Facsimile Protocol (IFP) package in the uplink direction (where data are packed and transmitted to the IP network). However, when a V.21 frame is long, the delay due to the cache and packing of the V.21 frame data by the gateway may lead to the invalidity of the V.21 frame data received at the receiving end fax machine or expiry of the reception.

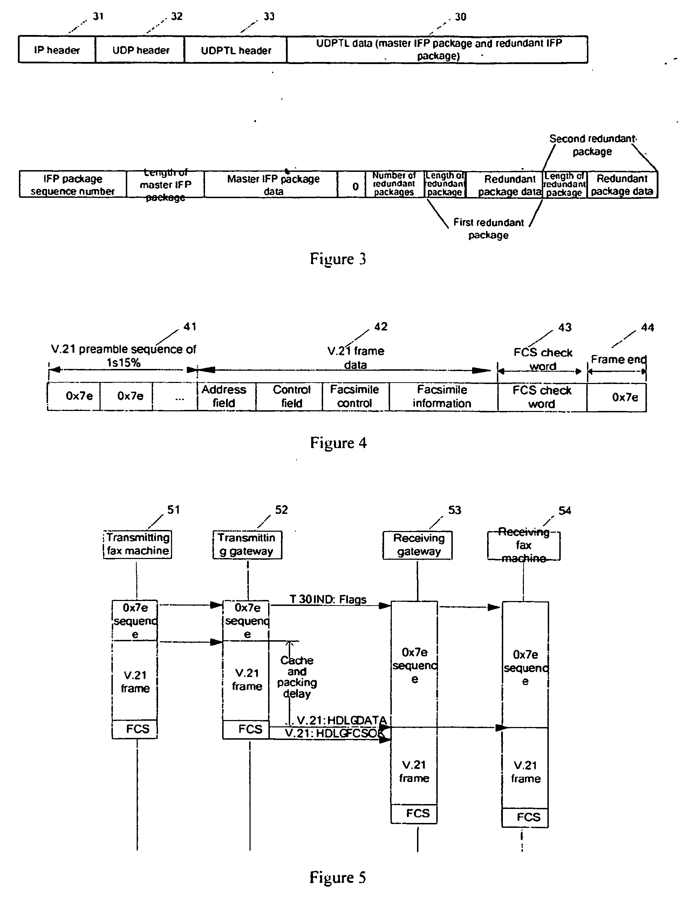

Figure 3 shows the structure of an IFP data package for T.38 IP facsimile. For each T.38 IP facsimile. IFP package, the IP header 31. User Datagram Protocol (UDP) header 32 and Facsimile UDP Transport Layer Protocol (UDPTL) header 33 beyond the UDPTL data 30 will consume extra network resources.

To save network resources, the gateway receives and demodulates V.21 frame data arriving from the PSTN side and caches the demodulated data till a complete frame is received. Then the gateway encapsulates the complete frame into an IFP package to minimize the quantity of IFP packages.

As shown in Figure 4, a complete V.21 frame includes a preamble sequence 41 (known as the v21-preamle, i.e. 0x7e sequence, whose duration is from 0.85s to 1.15s according to T.30). V.21 frame data 42, V.21 frame FCS check word 43 and a frame end 44.

As shown in Figure 5, a T.38 IFP package of a complete V.21 frame includes: a V.21 preamble indicator package, i.e. T.30-IND. which encapsulates the preamble sequence before frame data; a V.21 frame data package, i.e. V.21 HDLC-DATA. which encapsulates frame data from the address field before the FCS; a FCS check result package, i.e. V.21 HDLC-FCS-OK or V.21 HDLC-FCS-BAD: if the gateway gets correct frame data after demodulation, a V.21 HDLC-FCS-OK is encapsulated, and if gateway gets error data, a V.21 HDLC-FCS-BAD is encapsulated: a V.21 frame end package, i.e. V.21 SIG-END, indicating disappearance of the energy of the V.21 frame signal received and demodulated by the gateway.

For example, when the fax machine 51 at the transmitting end sends V.21 frame signals to the fax machine 54 at the receiving end, the transmitting fax machine 51 modulates and sends a V.21 frame signal; the transmitting gateway 52 demodulates the V.21 frame signal received on the PSTN side and determines that a V.21 preamble is received after getting the 0x7e sequence; the transmitting gateway 52 encapsulates a T.30_IND:FLAG according to the T.38 and sends the indicator package to the receiving gateway 53. Likewise, the transmitting gateway 52 demodulates V.21 frame data, and encapsulates the frame data into a V.21:HDLC-DATA package according to the T.38 and encapsulates the FCS check result into a V.21 :HDLC-FCS-OK package.

Upon reception of the T.30_MD:FLAG the receiving gateway 53 sends a 0x7e sequence to the receiving fax machine 54 according to the V.21 (H) modulation mode. The receiving gateway 53 does not modulate and send V.21 frame data to the receiving fax machine 54 until the entire V.21:HDLC-DATA package is received.

The cache and packing of a complete V.21 frame signal that lasts 1.3s is taken as an example. As shown in Figure 5, the method used in the prior art to cache and pack a complete frame will lead to a long interval between the V.21 preamble indicator and the V.21:HDLC-DATA package (1s s long preamble sequence + 1.3s for caching the entire frame data = 2.3s). If the receiving gateway 53 starts V.21 (H) modulation as soon as it receives the T.30_IND:FLAG (usual way of processing by gateway products) and sends modulated V.21 preamble sequence, that is, the 0x7e sequence, to the receiving fax machine 54 but does not send V.21 frame data until the entire V.21:HDLC-DATA is received, the V.21 preamble sequence sent by the receiving gateway 53 to the receiving fax machine 54 lasts over 2 seconds. The transmission duration of the V.21 frame data package and the transmission duration of the preamble sequence together exceed 3.5 seconds while some fax machines of certain manufacturers regard this extra-long V.21 frame signal as invalid. Because the method for the transmitting gateway 52 to pack V.21 frame data is fixed, even if the transmitting fax machine 51 re-transmits the frame signal, the receiving fax machine 54 will still regard the received signal as invalid till the connection is torn down due to timeout.

Such packing mechanism of the gateway makes the packing delay in direct proportion to the duration of V.21 frame data. The longer the V.21 frame data is, the longer the delay for the transmitting gateway 42 to pack the V.21 frame data is, and therefore, the more possible the expiry of reception of the receiving fax machine 54 may be. As a result, the IP facsimile system performs poorer in resisting network delay and jitter.

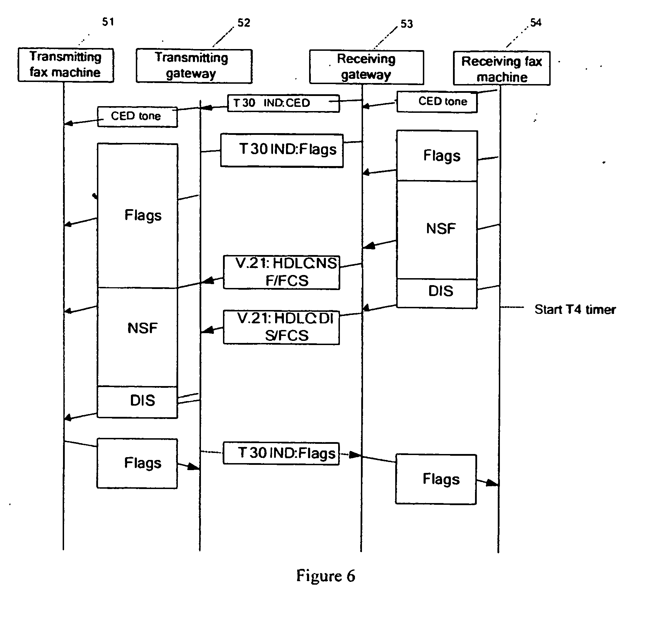

As shown in Figure 6, after a call is set up between the transmitting and receiving fax machines, the receiving fax machine 54 sends a NSF/DIS command signal to the transmitting fax machine 51. According to the prior art, after the receiving fax machine 54 sends a DIS signal, the T4 timer (which is set to 3s±15%, that is, 2.55s to 3.45s) is activated. If the V.21 preamble sequence of the response signal is not received between 2.55s to 3.45s, the reception of the response is regarded as having expired. The time needed from sending of the NSF/DIS command signal to reception of the response signal includes: processing delay of the receiving gateway 53 and the transmitting gateway 52, network transmission delay, and transmission delay in PSTN lines at the two ends. Therefore, the shorter the processing delay of the gateway is, the stronger the IP facsimile system is to resist network delay and jitter, and the more benefit to the interaction between the command signal and the response signal.

US patent 6,104,505 discloses a method that provides any type of data information in a facsimile message is configured to accept data information at a source terminal from an external device and send the data information to one or more destinations terminals via a facsimile message. The US patent application 2004/0042467 provides a method according to which the receiving gateway monitors the arrival jitter of the data packets from the peer gateway as well as the amount of the remaining data to modulate toward the receiving fax machine at any given time. If the amount of the remaining data in the buffer is below a given threshold and the gateway has already transmitted the data portion of a scan line toward the receiving fax machine, then the gateway starts transmission of "fill" or HDLC flags. European patent application EP 1 119 182 A2 provides a communication method for selectively performing facsimile communication via the internet and facsimile communication without the internet, wherein a communication parameter is changed based on whether the facsimile communication via the internet or the facsimile communication without the internet is to be performed. US5790641 deals with a system for extending the time period at which a response signal can be received before a time-out occurs.

Therefore, adoption of the mechanism of packing complete frames in the gateway, will introduce a long professing delay in the case of a long V.21 frame, causing inconvenience for fax users to transfer documents and weakening the compatibility of the gateway and the capability of the gateway to resist network delay.

### Summary of the Invention

Embodiments of the invention provide a system and a method for transmitting facsimile data over a network and an apparatus and a method for packing data so as to avoid long delay caused by data packing, transmit and increase the speed of data transmission.

A method for transmitting facsimile data over a network as presently claimed, which includes:
by a first gateway, demodulating and receiving V21 frame signal data sent by a first fax machine;
judging, by the first gateway, whether a frame end signal is detected:
when a frame end signal is detected, the first gateway packs and transmits the V.21 frame signal data already cached that belongs to a same frame with the frame end signal and packs and transmits the received V.21 frame signal data;
when no frame end signal is detected, the first gateway caches the received V.21 frame signal data and packs and transmits the V.21 frame signal data already cached that belongs to a same frame when the amount of the cached V.21 frame signal data reaches a threshold value.

A system for transmitting facsimile data over a network includes a data receiving module, a first judgment module, a first packing module, a second packing module and a cache module placed in a first gateway;
the data receiving module is adapted to modulate and receive V.21 frame signal data sent by a first fax machine;
the first judgment module is adapted to judge whether a frame end signal is detected and if so, triggers processing of the first packing module to process, or else triggers processing of the cache module;
the first packing module is adapted to pack and transmit V.21 frame signal data already cached that belongs to a same frame with the frame end signal and pack and transmit V.21 frame signal data received by the data receiving module;
the cache module is adapted to cache the received V.21 frame signal data; and
the second packing module is adapted to pack and transmit V.21 frame signal data that is cached and belongs to a same frame when the amount of data of the V.21 frame signal data cached in the cache module reaches the threshold value.

A method for packing data includes:
receiving a data frame to be packed;
judging whether a frame end signal is detected:
when a frame end signal is detected, packing data that is already cached and belongs to a same frame with the frame end signal and packing the data frame;
when no frame end signal is detected, caching the data frame to be packed and packing cached data that belongs a same frame when the amount of data of the data frame to be packed reaches a threshold; or continuing receiving the data frame to be packed when the amount of data of the data frame to be packed has not reached the threshold.

An apparatus for packing data includes a data receiving module, a first judgment module, a first packing module, a second packing module and a cache module;
the data receiving module is adapted to receive a data frame to be packed;
the first judgment module is adapted to judge whether a frame end signal is detected and if so, triggers processing of the first packing module to process, or else triggers processing of the cache module:
the first packing module is adapted to pack data that is already cached and belongs to a same frame with the frame end signal and pack the frame end signal;
the cache module is adapted to cache the received data frame to be packed; and
the second packing module is adapted to pack a data frame that is cached and belongs to a same frame when the amount of data of the data frame to be packed cached in the cache module reaches a threshold.

With the foregoing method and system for transmitting facsimile data over a network and the method and apparatus for packing data, the maximum amount of data that a data package can carry is limited so as to minimize the delay induced by data packing and cache and therefore, data can be transmitted over a network at higher speed.

### Brief Description of the Drawings

Figure 1 shows a T.38 IP real-time facsimile system in the prior art;
Figure 2 shows a typical IP real-time facsimile procedure in the prior art;
Figure 3 shows the structure of an IFP package in T.38 IP facsimile in the prior art;
Figure 4 shows the structure of a complete V.21 frame signal in the prior art;
Figure 5 shows how the data cache and packing causes delay in the prior art;
Figure 6 shows a command interaction procedure between the transmitting and receiving fax machines in the prior art;
Figure 7 shows a method for transmitting facsimile data over a network according to an embodiment of the invention;
Figure 8 shows a method for transmitting facsimile data over a network according to another embodiment of the invention;
Figure 9 shows a system for transmitting facsimile data over a network according to an embodiment of the invention; and
Figure 10 shows a first packing module in the system for transmitting facsimile data over a network according to an embodiment of the invention.

### Detailed Description of the Embodiments

Embodiments of the invention adjust the duration for caching and packing data frames so as to ensue that long frames are transferred to the receiving end in time so that the transmission ofdata over a network is faster.

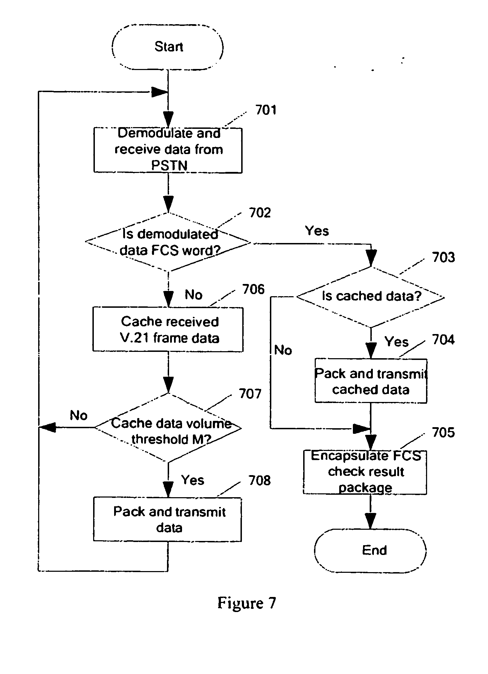

As shown in Figure 7, a method for transmitting facsimile data over a network according to an embodiment of the invention includes the following steps:
701: The first gateway demodulates V.21 frame signal data sent by the first fax machine;
702: The first gateway judges whether the demodulated V.21 frame signal data has a frame end signal, and if there is a frame end signal, step 703 is executed, or else step 706 is executed;
703: Whether the first gateway has already cached data is judged, and if so, step 704 is executed, or else, step 705 is executed;
704: The first gateway packs and transmits the already cached V.21 frame signal data that belongs to a same frame with the frame end signal;
705: After the first gateway packs and transmits the already cached V.21 frame signal data; the second gateway receives and unpacks the V.21 frame signal data package, modulates the data and sends the data to the second fax machine;
706: The first gateway caches the received V.21 frame signal data;
707: The first gateway judges whether the amount of the cached V.21 frame signal data has reached the threshold value M, and if the amount of the cached V.21 frame signal data has reached the threshold value M , step 708 is executed, or else, step 701 is executed;
708: The first gateway packs and transmits the already cached V.21 frame signal data that belongs to the same frame. Upon reception of the V.21 frame signal data package, the second gateway unpacks the package, modulates the data and sends the data to the second fax machine.

The step 703 includes:
C1: Judge whether there is V.21 frame signal data already cached that belongs to the same frame with the frame end signal and if there is such data, step C2 and step C3 are executed in turn, or else step C3 is executed:
C2: Pack and transmit the V.21 frame signal data that belongs to the same frame with the frame end signal;
C3: Pack and send the frame end signal.

Normally, at the end of data transmission, the carrier will disappear. If carrier disappearance is detected, it can be determined that data transmission is over and there is no need further receiving or packing data. Therefore, before packing, it is necessary to judge whether a received data signal is a carrier disappearance signal.

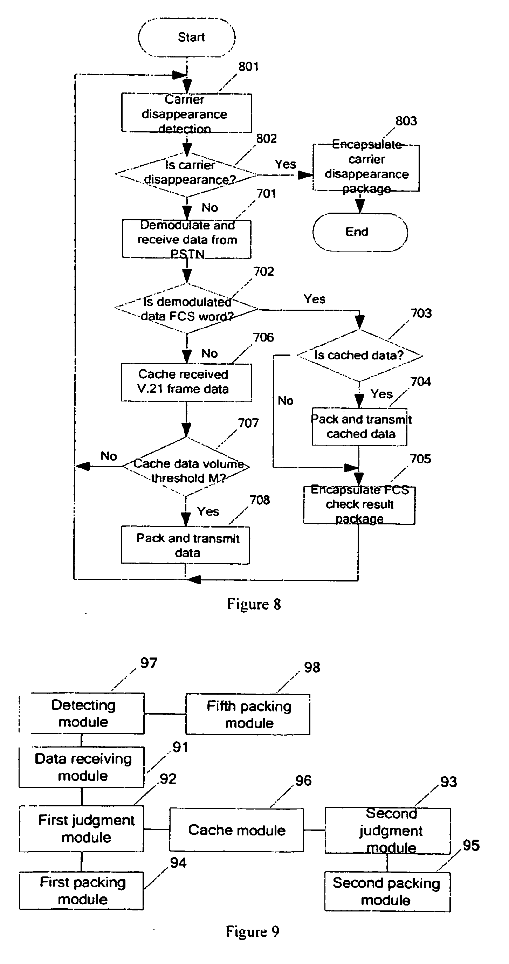

As shown in Figure 8. a method for transmitting facsimile data over a network according to another embodiment of the invention includes:
801: Perform carrier disappearance detection on a received data signal;
802: Judge whether there is a carrier disappearance signal and if no carrier disappearance signal is detected, step 701 is executed, or else, step 803 is executed;
803: Pack and send the carrier disappearance signal;
701: The first gateway demodulates V.21 frame signal data sent by the first fax machine;
702: The first gateway judges whether the demodulated V:21 frame signal data has a frame end signal, and if there is a frame end signal, step 703 is executed, or else step 706 is executed:
703: Whether the first gateway has already cached data is judged, and if so, step 704 is executed or else step 705 is executed:
704: The first gateway packs and transmits the already cached V.21 frame signal data that belongs to a same frame with the frame end signal;
705: After the first gateway packs and transmits the already cached frame end signal; the second gateway receives and unpacks the V.21 frame signal data package, modulates the data and sends the data to the second fax machine;
706: The first gateway caches the received V.21 frame signal data;
707: The first gateway judges whether the amount of data of the cached V.21 frame signal data has reached the threshold value M, and if the amount of data of the cached V.21 frame signal data reaches the threshold value M, step 708 is executed, or else, step 701 is executed:
708: The first gateway packs and transmits the already cached V.21 frame signal data that belongs to the same frame.

Upon reception of the V.21 frame signal data package, the second gateway unpacks the package, modulates the data and sends the data to the second fax machine. Upon reception of the carrier disappearance signal data package, the second gateway unpacks the package, modulates the data and sends the data to the second fax machine.

As shown in Figure 9, a system for transmitting facsimile data over a network according to an embodiment of the invention includes a data receiving module 91, a first judgment module 92, a second judgment module 93, a first packing module 94, a second packing module 95 and a cache module 96 placed in a first gateway, and a transmitting module placed in a second gateway.

The data receiving module 91 is adapted to demodulate received V.21 frame signal data sent by a first fax machine.

The first judgment module 92 is adapted to judge whether the demodulated V.21 frame signal has a frame end signal, and if there is a frame end signal, the first packing module 94 is triggered to perform the processing, or else, the cache module 96 is triggered to perform the processing.

The first packing module 94 is adapted to pack and transmit V.21 frame signal data already cached that belongs to a same frame with the frame end signal, and pack and transmit the V.21 frame signal data received by the data receiving module 91.

The cache module 96 is adapted to cache the received V.21 frame signal data.

The second judgment module 93 is adapted to judge whether the amount of data of the cached V.21 frame signal data has reached the threshold value M, and if the amount of data of the cached V.21 frame signal data reaches the threshold value M, the second packing module 95 is triggered to perform the processing, or else, the data receiving module 91 is triggered to perform the processing.

The second packing module 95 is adapted to pack and transmit the cached V.21 frame signal data that belongs to the same frame.

The transmitting module is adapted to unpack the V.21 frame signal data package upon reception of the package, modulate the data and send the data to the second fax machine.

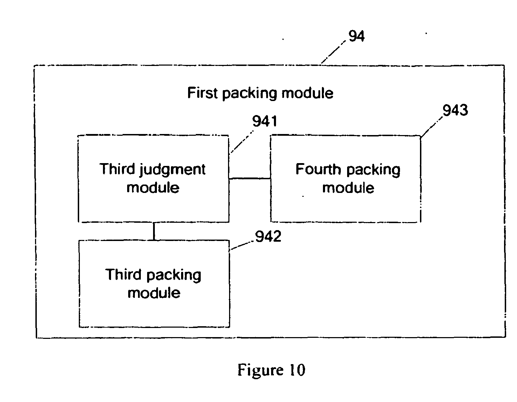

Figure 10 shows a possible structure of the first packing module 94 according to an embodiment of the invention. The first packing module 94 includes a third judgment module 941, a third packing module 942 and a fourth packing module 943.

The third judgment module 941 is adapted to judge whether V.21 frame signal data already cached that belongs to a same frame with the frame end signal, and if there is such data, the third packing module 942 and the fourth packing module 943 are triggered to perform the processing, or else the fourth packing module 943 is triggered to perform the processing.

The third packing module 942 is adapted to pack the V.21 frame signal data that belongs to the same frame with the frame end signal.

The fourth packing module 943 is adapted to pack the frame end signal.

In addition, before packing, it is preferred to judge whether the received data signal is a carrier disappearance signal. Therefore, in another embodiment of the invention, a system for transmitting facsimile data further includes a detecting module 97 and a fifth packing module 98.

The detecting module 97 is adapted to perform carrier disappearance detection on the received data signal sent by the first fax machine and if no carrier disappearance signal is detected, the data receiving module 91 is triggered to perform the processing, or else, the fifth packing module 98 is triggered to perform the processing.

The fifth packing module 98 is adapted to pack and transmit the carrier disappearance signal.

The transmitting module is further adapted to:

Unpack the carrier disappearance signal data package upon reception of the package, modulate the data and send the data to the second fax machine.

In an embodiment of the invention, a frame end signal may be a V.21 frame FCS check word or another signal that demonstrates end of the V.21 frame signal data. When V.21 frame signal data is packed, if network resources permit, to reduce the gateway processing delay, it is better when the amount of data carried by each package is smaller, that is, the threshold M should be smaller. To reduce consumption of network resources, the threshold M may be set to between 6 bytes and 8 bytes. How V.21 frame signal data is packed is the same as in the prior art and is therefore not further described herein.

In an embodiment of the invention, when the amount of the data received from the PSTN and cached by the gateway reaches the threshold value, the gateway packs and transmits the cached data and meanwhile purges the buffer area. Afterwards, the gateway continues receiving data from the PSTN and comparing the amount of cached data with the threshold M.

When the gateway detects a FCS check word, if there is already data cached in the buffer area, the gateway packs and transmits all data in the buffer no matter whether the amount of data in the buffer has reached the threshold value. The gateway also packs and transmits the FCS check result of the frame. If there is no data cached in buffer area, the gateway directly packs and transmits the FCS check result.

According to the facsimile procedure defined in T.30, a fax device has strict time restrictions on the waiting and reception of each signal. A real-time facsimile gateway should avoid introducing a long delay due to its processing.

In the technical solution proposed by embodiments of the present invention, when a T.38 gateway packs and transmits V.21 frame data, by limiting the maximum amount of data carried by each IP package, the delay caused by data packing and cache of the uplink gateway is limited. This assures that the V.21 frame signal data is transmitted to the correct receiving fax machine in time and avoids facsimile failure due to the expiry of V.21 frame signal data reception by the fax machine. Thus, the uplink gateway is more compatible with the fax machine and is stronger in resisting network jitter and delay during IP real-time facsimile transmission.

In addition, to prevent data interruption in a PSTN line when a downlink gateway transmits V.21 frame signal data to a fax machine due to network jitter, the downlink gateway normally caches the V.21 frame signal data received from the IP side before modulation and transmission. With adoption of the packing method provided by an embodiment of the invention, the downlink gateway may adjust the size of the Jitter Buffer (JB) or the storable amount of data flexibly according to the network state so that the downlink gateway is more compatible with the fax machine.

As shown in Figure 8, a method for packing data in a preferred embodiment of the invention includes the following steps.
701: Receive a data frame to be packed;
702: Judge whether the data frame to be packed has a frame end signal and if there is a frame end signal, step 703 is executed, or else, step 706 is executed;
703: Judge whether there is already cached data and if so, step 704 is executed, or else, step 705 is executed:
704: Pack the data already cached that belongs to a same frame with the frame end signal;
705: Pack the frame end signal;
706: Cache the received data frame to be packed;
707: Judge whether the amount of data of the cached V.21 frame signal data has reached the threshold value M. and if the amount of data of the cached V.21 frame signal data has reached the threshold value M, step 708 is executed, or else, step 701 is executed;
708: Pack the cached data frame that belongs to the same frame. The step 703 includes:
C1: Judge whether there is a data frame already cached that belongs to the same frame with the frame end signal and if there is such data, step C2 and step C3 are executed, or else, step C3 is executed;
C2: Pack the data frame that belongs to the same frame with the frame end signal; and
C3: Pack the frame end signal.

In addition, before packing, it is preferred to judge whether a received data signal is a carrier disappearance signal. Therefore, the method for packing data further includes steps 801-803, where step 801 and step 802 are executed before step 701: .
801: Perform carrier disappearance detection on a received data signal to be packed;
802: Judge whether there is a carrier disappearance signal and if no carrier disappearance signal is detected, step 701 is executed, or else, step 803 is executed;
803: Pack the carrier disappearance signal.

As shown in Figure 9, an apparatus for packing data according to a preferred embodiment of the invention includes a data receiving module 91, a first judgment module 92. a second judgment module 93. a first packing module 94, a second packing module and a cache module 96.

The data receiving module 91 is adapted to receive a data frame to be packed.

The first judgment module 92 is adapted to judge whether the data frame to be packed has a frame end signal of the data frame and if there is a frame end signal, the first packing module 94 is triggered to perform the processing, or else, the cache module 96 is triggered to perform the processing.

The first packing module 94 is adapted to pack data already cached that belongs to a same frame with the frame end signal and pack the data frame received by the data receiving module 91.

The cache module 96 is adapted to cache the received data frame to be packed.

The second judgment module 93 is adapted to judge whether the amount of data of the cached data frame to be packed has reached the threshold value M, and if the amount of data of the cached data frame to be packed has reached the threshold value M, the second packing module 95 is triggered to perform the processing, or else, the data receiving module 91 is triggered to perform the processing.

The second packing module 95 is adapted to pack the data frame already cached that belongs to the same frame.

Figure 10 shows a possible structure of the first packing module 94 according to an embodiment of the invention. The first packing module 94 includes a third judgment module 941, a third packing module 942 and a fourth packing module 943.

The third judgment module 941 is adapted to judge whether there is a data frame already cached that belongs to a same frame with the frame end signal and if there is such data, the third packing module 942 and the fourth packing module 943 is triggered to perform the processing, or else the fourth packing module 943 is triggered to perform the processing.

The third packing module 942 is adapted to pack the data frame data that belongs to the same frame with the frame end signal.

The fourth packing module 943 is adapted to pack the frame end signal.

In addition, before packing, it is preferred to judge whether the received data signal is a carrier disappearance signal. Therefore, the apparatus for packing data further includes a detecting module 97 and a fifth packing module 98.

The detecting module 97 is adapted to perform carrier disappearance detection on the received data signal to be packed and if no carrier disappearance signal is detected, the data receiving module 91 is triggered to perform the processing, or else the fifth packing module 98 is triggered to perform the processing.

The fifth packing module 98 is adapted to pack the carrier disappearance signal.

In the method and apparatus for packing data provided by embodiments of the invention, a frame end signal may a V.21 FCS check word or another signal that demonstrates end of the frame data. When a data frame is packed, if network resources permit, to reduce the gateway processing delay, it is better when the amount of data carried by each package is smaller, that is, the threshold M should be smaller. To reduce consumption of network resources, the threshold M may be set between 6 bytes and 8 bytes. How a data frame is packed is the same as in the prior art and is therefore not further described herein.

In addition to the T.38 IP real-time facsimile system, the method and apparatus for packing data provided by embodiments of the invention may be adopted in other data transmitting systems. The adoption will not introduce a long delay due to data packing and transmitting and therefore the data transmitting is faster. In a normal network data transmitting procedure, a node usually caches data before packing and transmitting it. Because caching data is time consuming, a transmitting delay is inevitable. With the method and apparatus provided by embodiments of the invention, the maximum amount of data that a data package can carry is limited so as to minimize the delay induced by packing and cache and therefore, data is transmitted over a network at higher speed.

## Claims

1. A method for processing facsimile data over a network, comprising:
demodulating, by a first gateway, received V.21 frame signal data sent by a first fax machine;
judging, by the first gateway, whether a frame end signal is detected;
packing and transmitting, by the first gateway, the V.21 frame signal data that is cached and belongs to a same frame with the frame end signal and the received V.21 frame signal data, when the frame end signal is detected; **characterized by**:
caching, by the first gateway, the received V.21 frame signal data when the frame end signal is not detected, and when the amount of data of the cached V.21 frame signal data reaches a threshold value, packing and transmitting, by the first gateway, the V.21 frame signal data that is cached and belongs to a same frame.

2. The method for processing facsimile data over a network according to claim 1, wherein the frame end signal is a V.21 frame FCS check word.

3. The method for processing facsimile data over a network according to claim 1, wherein when the V.21 frame signal data that belongs to the same frame with the frame end signal is not cached in the first gateway, the method further comprises packing and transmitting the frame end signal.

4. The method for processing facsimile data over a network according to claim 1, 2 or 3, further comprising:
unpacking, by a second gateway, a received data package;
modulating, by the second gateway, the data package; and
sending, by the second gateway, the modulated data package to a second fax machine.

5. The method for processing facsimile data over a network according to claim 4, further comprising:
performing, by the first gateway, a carrier disappearance detection on a received data signal; and
packing and sending a carrier disappearance signal when the carrier disappearance signal is detected.

6. The method for processing facsimile data over a network according to claim 5, further comprising:
unpacking, by the second gateway, a received data package of the carrier disappearance signal;
modulating, by the second gateway, the data package of the carrier disappearance signal; and
sending, by the second gateway, the modulated data package of the carrier disappearance signal to the second fax machine.

7. A system for processing facsimile data over a network, comprising a data receiving module (91), a first judgment module (92), a first packing module (94), a second packing module (95) and a cache module (96) placed in a first gateway, wherein:
the data receiving module (91) is adapted to demodulate received V.21 frame signal data sent by a first fax machine;
the first judgment module (92) is adapted to judge whether a frame end signal is detected, and if the frame end signal is detected, to trigger the first packing module (94) to process, and if the frame end signal is not detected, to trigger the cache module (96) to process;
the first packing module (94) is adapted to pack and transmit the V.21 frame signal data that is already cached and belongs to a same frame with the frame end signal, and pack and transmit the V.21 frame signal data received by the data receiving module (91);
the cache module (96) is adapted to cache the received V.21 frame signal data; and **characterized in that**
the second packing module (95) is adapted to pack and transmit the V.21 frame signal data that is already cached and belongs to a same frame when the amount of data of the V.21 frame signal data cached in the cache module (96) reaches a threshold value.

8. The system for processing facsimile data over a network according to claim 7, further comprising:
a second judgment module (93), adapted to judge whether the amount of data of the cached V.21 frame signal data reaches a threshold value, and if the amount of data of the cached V.21 frame signal data reaches the threshold value, to trigger the second packing module (95) to process, and if the amount of data of the cached V.21 frame signal data does not reach the threshold value, to trigger the data receiving module (91) to process.

9. The system for processing facsimile data over a network according to claim 7, wherein the first packing module (94) further comprises: a third judgment module (941), a third packing module (942) and a fourth packing module (943);
the third judgment module (941) is adapted to judge whether there is a V.21 frame signal data that is cached and belongs to the same frame with the frame end signal, and if there is the V.21 frame signal data that is cached and belongs to the same frame with the frame end signal, trigger the third packing module (942) and the fourth packing module (943) to process, if there is not the V.21 frame signal data that is cached and belongs to the same frame with the frame end signal, trigger the fourth packing module (943) to process;
the third packing module (942) is adapted to pack the V.21 frame signal data that belongs to the same frame with the frame end signal; and
the fourth packing module (943) is adapted to pack the frame end signal.

10. The system for processing facsimile data over a network according to claim 7, 8 or 9, further comprising:
a transmitting module placed in a second gateway, adapted to unpack received data package, modulate the data package and send the data package to a second fax machine.

11. The system for processing facsimile data over a network according to claim 10, wherein the system further comprises a detecting module (97) and a fifth packing module (98);
the detecting module (97) is adapted to perform carrier disappearance detection on a received data signal sent by a first fax machine, and if the carrier disappearance signal is not detected, trigger the data receiving module (91) to process, and if the carrier disappearance signal is detected, trigger the fifth packing module (98) to process; and
the fifth packing module (98) is adapted to pack and transmit the carrier disappearance signal.

12. The system for processing facsimile data over a network according to claim 11, wherein the transmitting module is further adapted to unpack received data package of the carrier disappearance signal, modulate the data package of the carrier disappearance signal and send the data package of the carrier disappearance signal to the second fax machine.

## Patentansprüche

1. Verfahren zum Verarbeiten von Faksimiledaten über ein Netzwerk, mit den folgenden Schritten:
Demodulieren von empfangenen, durch eine erste Faxmaschine gesendeten V.21-Rahmensignaldaten durch ein erstes Gateway;
Beurteilen durch das erste Gateway, ob ein Rahmenendesignal detektiert wird;
Verpacken und Senden der V.21-Rahmensignaldaten, die Cache-gespeichert werden und zu einem selben Rahmen mit dem Rahmenendesignal und den empfangenen V.21-Rahmensignaldaten gehören, durch das erste Gateway, wenn das Rahmenendesignal detektiert wird; **gekennzeichnet durch**
Cache-Speichern der empfangenen V.21-Rahmensignaldaten **durch** das erste Gateway, wenn das Rahmenendesignal nicht detektiert wird, und wenn die Datenmenge der Cache-gespeicherten V.21-Rahmensignaldaten einen Schwellenwert erreicht, Verpacken und Senden der V.21-Rahmensignaldaten, die Cache-gespeichert werden und zu einem selben Rahmen gehören, **durch** das erste Gateway.

2. Verfahren zum Verarbeiten von Faksimiledaten über ein Netzwerk nach Anspruch 1, wobei das Rahmenendesignal ein V.21-Rahmen-FCS-Prüfwort ist.

3. Verfahren zum Verarbeiten von Faksimiledaten über ein Netzwerk nach Anspruch 1, wobei, wenn die V.21-Rahmensignaldaten, die zu demselben Rahmen mit dem Rahmenendesignal gehören, nicht in dem ersten Gateway Cache-gespeichert werden, das Verfahren ferner das Verpacken und Senden des Rahmenendesignals umfasst.

4. Verfahren zum Verarbeiten von Faksimiledaten über ein Netzwerk nach Anspruch 1, 2 oder 3, ferner mit den folgenden Schritten:
Entpacken einer empfangenen Datenpackung durch ein zweites Gateway;
Modulieren der Datenpackung durch das zweite Gateway; und
Senden der modulierten Datenpackung zu einer zweiten Faxmaschine durch das zweite Gateway.

5. Verfahren zum Verarbeiten von Faksimiledaten über ein Netzwerk nach Anspruch 4, ferner mit den folgenden Schritten:
Ausführen einer Trägerverschwunddetektion an einem empfangenen Datensignal durch das erste Gateway; und
Verpacken und Senden eines Trägerverschwundsignals, wenn das Trägerverschwundsignal detektiert wird.

6. Verfahren zum Verarbeiten von Faksimiledaten über ein Netzwerk nach Anspruch 5, ferner mit den folgenden Schritten:
Entpacken einer empfangenen Datenpackung des Trägerverschwundsignals durch das zweite Gateway;
Modulieren der Datenpackung des Trägerverschwundsignals durch das zweite Gateway; und
Senden der modulierten Datenpackung des Trägerverschwundsignals zu der zweiten Faxmaschine durch das zweite Gateway.

7. System zum Verarbeiten von Faksimiledaten über ein Netzwerk, das ein Datenempfangsmodul (91), ein erstes Beurteilungsmodul (92), ein erstes Verpackungsmodul (94), ein zweites Verpackungsmodul (95) und ein Cache-Modul (96) in einem ersten Gateway platziert umfasst, wobei
das Datenempfangsmodul (91) dafür ausgelegt ist, empfangene, durch eine erste Faxmaschine gesendete V.21-Rahmensignaldaten zu demodulieren;
das erste Beurteilungsmodul (92) dafür ausgelegt ist, zu beurteilen, ob ein Rahmenendesignal detektiert wird, und, wenn das Rahmenendesignal detektiert wird, das erste Verpackungsmodul (94) zu triggern, zu verarbeiten, und, wenn das Rahmenendesignal nicht detektiert wird, das Cache-Modul (96) zu triggern, zu verarbeiten;
das erste Verpackungsmodul (94) dafür ausgelegt ist, die V.21-Rahmensignaldaten, die bereits Cache-gespeichert werden und zu einem selben Rahmen mit dem Rahmenendesignal gehören, zu verpacken und zu senden und die durch das Datenempfangsmodul (91) empfangenen V.21-Rahmensignaldaten zu verpacken und zu senden;
das Cache-Modul (96) dafür ausgelegt ist, die empfangenen V.21-Rahmensignaldaten im Cache zu speichern; und **dadurch gekennzeichnet, dass**
das zweite Verpackungsmodul (95) dafür ausgelegt ist, die V.21-Rahmensignaldaten, die bereits Cache-gespeichert werden und zu einem selben Rahmen gehören, zu verpacken und zu senden, wenn die Datenmenge der in dem Cache-Modul (96) Cache-gespeicherten V.21-Rahmensignaldaten einen Schwellenwert erreicht.

8. System zum Verarbeiten von Faksimiledaten über ein Netzwerk nach Anspruch 7, ferner umfassend:
ein zweites Beurteilungsmodul (93), das dafür ausgelegt ist, zu beurteilen, ob die Datenmenge der Cache-gespeicherten V.21-Rahmensignaldaten einen Schwellenwert erreicht, und, wenn die Datenmenge der Cache-gespeicherten V.21-Rahmensignaldaten den Schwellenwert erreicht, das zweite Verpackungsmodul (95) zu triggern, zu verarbeiten, und, wenn die Datenmenge der Cache-gespeicherten V.21-Rahmensignaldaten den Schwellenwert nicht erreicht, das Datenempfangsmodul (91) zu triggern, zu verarbeiten.

9. System zum Verarbeiten von Faksimiledaten über ein Netzwerk nach Anspruch 7, wobei das erste Verpackungsmodul (94) ferner Folgendes umfasst:
ein drittes Beurteilungsmodul (941), ein drittes Verpackungsmodul (942) und ein viertes Verpackungsmodul (943); wobei
das dritte Beurteilungsmodul (941) dafür ausgelegt ist, zu beurteilen, ob V.21-Rahmensignaldaten vorliegen, die Cache-gespeichert werden und zu einem selben Rahmen mit dem Rahmenendesignal gehören, und, wenn die V.21-Rahmensignaldaten vorliegen, die Cache-gespeichert werden und zu demselben Rahmen mit dem Rahmenendesignal gehören, das dritte Verpackungsmodul (942) und das vierte Verpackungsmodul (943) zu triggern, zu verarbeiten, und, wenn die V.21-Rahmensignaldaten, die Cache-gespeichert werden und zu demselben Rahmen mit dem Rahmenendesignal gehören, nicht vorliegen, das vierte Verpackungsmodul (943) zu triggern, zu verarbeiten;
das dritte Verpackungsmodul (942) dafür ausgelegt ist, die V.21-Rahmensignaldaten, die zu demselben Rahmen mit dem Rahmenendesignal gehören, zu verpacken; und
das vierte Verpackungsmodul (943) dafür ausgelegt ist, das Rahmenendesignal zu verpacken.

10. System zum Verarbeiten von Faksimiledaten über ein Netzwerk nach Anspruch 7, 8 oder 9, ferner umfassend:
ein in einem zweiten Gateway angeordnetes Sendemodul, das dafür ausgelegt ist, die empfangene Datenpackung zu entpacken, die Datenpackung zu modulieren und die Datenpackung zu einer zweiten Faxmaschine zu senden.

11. System zum Verarbeiten von Faksimiledaten über ein Netzwerk nach Anspruch 10, wobei das System ferner ein Detektionsmodul (97) und ein fünftes Verpackungsmodul (98) umfasst;
das Detektionsmodul (97) dafür ausgelegt ist, Trägerverschwunddetektion an einem durch eine erste Faxmaschine gesendeten empfangenen Datensignal auszuführen und, wenn das Trägerverschwundsignal nicht detektiert wird, das Datenempfangsmodul (91) zu triggern, zu verarbeiten, und, wenn das Trägerverschwundsignal detektiert wird, das fünfte Verpackungsmodul (98) zu triggern, zu verarbeiten; und
das fünfte Verpackungsmodul (98) dafür ausgelegt ist, das Trägerverschwundsignal zu verpacken und zu senden.

12. System zum Verarbeiten von Faksimiledaten über ein Netzwerk nach Anspruch 11, wobei das Sendemodul ferner dafür ausgelegt ist, die empfangene Datenpackung des Trägerverschwundsignals zu entpacken, die Datenpackung des Trägerverschwundsignals zu modulieren und die Datenpackung des Trägerverschwundsignals zu der zweiten Faxmaschine zu senden.

## Revendications

1. Procédé de traitement de données télécopiées sur un réseau, comprenant :
la démodulation, par une première passerelle, de données de signal de trame V.21 reçues, envoyées par un premier télécopieur ;
le fait de juger, par la première passerelle, si un signal de fin de trame a été détecté ou non ;
la mise en paquet et la transmission, par la première passerelle, des données de signal de trame V.21 qui sont mises en cache et appartiennent à une même trame avec le signal de fin de trame et des données de signal de trame V.21 reçues, quand le signal de fin de trame est détecté ; **caractérisé par** :
la mise en cache, par la première passerelle, des données de signal de trame V.21 reçues quand le signal de fin de trame n'est pas détecté, et quand la quantité de données des données de signal de trame V.21 mises en cache atteint une valeur de seuil, la mise en paquet et la transmission, par la première passerelle, des données de signal de trame V.21 qui sont mises en cache et appartiennent à une même trame.

2. Procédé de traitement de données télécopiées sur un réseau selon la revendication 1, dans lequel le signal de fin de trame est un mot de contrôle FCS de trame V.21.

3. Procédé de traitement de données télécopiées sur un réseau selon la revendication 1, dans lequel quand les données de signal de trame V.21 qui appartiennent à la même trame avec le signal de fin de trame ne sont pas mises en cache dans la première passerelle, le procédé comprend en outre la mise en paquet et la transmission du signal de fin de trame.

4. Procédé de traitement de données télécopiées sur un réseau selon la revendication 1, 2 ou 3, comprenant en outre :
le démantèlement, par une seconde passerelle, d'un paquet de données reçu ;
la modulation, par la seconde passerelle, du paquet de données ; et
l'envoi, par la seconde passerelle, du paquet de données modulé à un second télécopieur.

5. Procédé de traitement de données télécopiées sur un réseau selon la revendication 4, comprenant en outre :
l'exécution, par la première passerelle, d'une détection de disparition de porteuse sur un signal de données reçu ; et
la mise en paquet et l'envoi d'un signal de disparition de porteuse quand le signal de disparition de porteuse est détecté.

6. Procédé de traitement de données télécopiées sur un réseau selon la revendication 5, comprenant en outre :
le démantèlement, par la seconde passerelle, d'un paquet de données reçu du signal de disparition de porteuse ;
la modulation, par la seconde passerelle, du paquet de données du signal de disparition de porteuse ; et
l'envoi, par la seconde passerelle, du paquet de données modulé du signal de disparition de porteuse au second télécopieur.

7. Système de traitement de données télécopiées sur un réseau, comprenant un module de réception de données (91), un premier module de jugement (92), un premier module de mise en paquet (94), un deuxième module de mise en paquet (95) et un module de cache (96) placés dans une première passerelle, dans lequel :
le module de réception de données (91) est adapté pour démoduler des données de signal de trame V.21 reçues, envoyées par un premier télécopieur ;
le premier module de jugement (92) est adapté pour juger si un signal de fin de trame est détecté ou non, et si le signal de fin de trame est détecté, déclencher le premier module de mise en paquet (94) pour qu'il procède à son traitement, et si le signal de fin de trame n'est pas détecté, déclencher le module de cache (96) pour qu'il procède à son traitement ;
le premier module de mise en paquet (94) est adapté pour mettre en paquet et transmettre les données de signal de trame V.21 qui sont déjà en cache et appartiennent à une même trame avec le signal de fin de trame, et mettre en paquet et transmettre les données de signal de trame V.21 reçues par le module de réception de données (91) ;
le module de cache (96) est adapté pour mettre en cache les données de signal de trame V.21 reçues ;
et **caractérisé en ce que**
le deuxième module de mise en paquet (95) est adapté pour mettre en paquet et transmettre les données de signal de trame V.21 qui sont déjà en cache et appartiennent à une même trame quand la quantité de données des données de signal de trame V.21 mises en cache dans le module de cache (96) atteint une valeur de seuil.

8. Système de traitement de données télécopiées sur un réseau selon la revendication 7, comprenant en outre :
un deuxième module de jugement (93), adapté pour juger si la quantité de données des données de signal de trame V.21 mises en cache atteint ou non une valeur de seuil, et si la quantité de données des données de signal de trame V.21 mises en cache atteint la valeur de seuil, déclencher le deuxième module de mise en paquet (95) pour qu'il procède à son traitement, et si la quantité de données des données de signal de trame V.21 mises en cache n'atteint pas la valeur de seuil, déclencher le module de réception de données (91) pour qu'il procède à son traitement.

9. Système de traitement de données télécopiées sur un réseau selon la revendication 7, dans lequel le premier module de mise en paquet (94) comprend en outre un troisième module de jugement (941), un troisième module de mise en paquet (942) et un quatrième module de mise en paquet (943) ;
le troisième module de jugement (941) est adapté pour juger s'il existe des données de signal de trame V.21 mises en cache et appartenant à la même trame avec le signal de fin de trame, et s'il existe des données de signal de trame V.21 mises en cache et appartenant à la même trame avec le signal de fin de trame, déclencher le troisième module de mise en paquet (942) et le quatrième module de mise en paquet (943) pour qu'ils procèdent à leur traitement, s'il n'existe pas de données de signal de trame V.21 mises en cache et appartenant à la même trame avec le signal de fin de trame, déclencher le quatrième module de mise en paquet (943) pour qu'il procède à son traitement ;
le troisième module de mise en paquet (942) est adapté pour mettre en paquet les données de signal de trame V.21 qui appartiennent à la même trame avec le signal de fin de trame ; et
le quatrième module de mise en paquet (943) est adapté pour mettre en paquet le signal de fin de trame.

10. Système de traitement de données télécopiées sur un réseau selon la revendication 7, 8 ou 9, comprenant en outre :
un module de transmission placé dans une seconde passerelle, adapté pour démanteler le paquet de données reçu, moduler le paquet de données et envoyer le paquet de données à un second télécopieur.

11. Système de traitement de données télécopiées sur un réseau selon la revendication 10,
le système comprenant en outre un module de détection (97) et un cinquième module de mise en paquet (98) ;
le module de détection (97) étant adapté pour effectuer une détection de disparition de porteuse sur un signal de données reçu envoyé par un premier télécopieur, et si le signal de disparition de porteuse n'est pas détecté, déclencher le module de réception de données (91) pour qu'il procède à son traitement, et si le signal de disparition de porteuse est détecté, déclencher le cinquième module de mise en paquet (98) pour qu'il procède à son traitement, et
le cinquième module de mise en paquet (98) étant adapté pour mettre en paquet et transmettre le signal de disparition de porteuse.

12. Système de traitement de données télécopiées sur un réseau selon la revendication 11, dans lequel le module de transmission est adapté en outre pour démanteler le paquet de données reçu du signal de disparition de porteuse, moduler le paquet de données du signal de disparition de porteuse et envoyer le paquet de données du signal de disparition de porteuse au second télécopieur.
